# EUROPEAN PATENT APPLICATION

(11) **EP 4 510 365 A1**
(43) Date of publication of application: **19.02.2025**
(21) Application number: 22958361.2
(22) Date of filing: 13.09.2022
(51) Int. Cl.: H01M 50/533, H01M 50/593

(54) **BATTERY CELL, BATTERY AND ELECTRIC DEVICE**

(71) Applicant: Contemporary Amperex Technology Co., Limited, Ningde, Fujian 352100 (CN)
(72) Inventor: BAI, Hualei, Ningde, Fujian 352100 (CN)
(74) Representative: Kraus & Lederer PartGmbB
(86) International application number: PCT/CN2022/118518
(87) International publication number: WO 2024/055167

(57) **Abstract**

The present disclosure provides a battery cell, a battery, and an electrical device. The battery cell comprises a shell, provided with an opening; an end cap covering the opening; an electrode assembly, arranged within the shell and provided with a first end surface facing the end cap; a first insulating component, provided between the electrode assembly and the end cap; a second insulating component, wrapping the electrode assembly, wherein an end of the second insulating component is connected to an outer peripheral surface of the first insulating component to form a connection portion; and a restraining component, at least partially arranged between the first end surface and the first insulating component, wherein the restraining component is configured to limit an insertion of a separator of the electrode assembly between the first insulating component and the second insulating component at the connection portion. The technical solution provided in the present disclosure can improve the safety of the battery.

## Description

### TECHNICAL FIELD

The present disclosure relates to the technical field of batteries, and specifically to a battery cell, a battery, and an electrical device.

### BACKGROUND ART

Energy conservation and emission reduction are the keys to the sustainable development of the automotive industry. Electric vehicles, due to their advantages of being energy-saving and environmentally friendly, have become an important component of sustainable development in the automotive industry. For electric vehicles, battery technology is another crucial factor that affects their development.

In the development of battery technology, how to improve the safety of batteries is a pressing technical problem in battery technology.

### SUMMARY

The present disclosure provides a battery cell, a battery, and an electrical device, and the technical solution provided in the present disclosure can improve the safety of the battery.

The present disclosure is realized by the following technical solutions.

In the first aspect, the present disclosure provides a battery cell, comprising a shell, provided with an opening; an end cap, covering the opening; an electrode assembly, arranged within the shell and provided with a first end surface facing the end cap; a first insulating component, provided between the electrode assembly and the end cap; a second insulating component, wrapping the electrode assembly, wherein an end of the second insulating component is connected to an outer peripheral surface of the first insulating component to form a connection portion; a restraining component, at least partially arranged between the first end surface and the first insulating component, wherein the restraining component is configured to limit the insertion of a separator of the electrode assembly between the first insulating component and the second insulating component at the connection portion.

In the above-described embodiment, the first end surface of the electrode assembly is restrained by providing the restraining component, so that the separator of the electrode assembly is not located between the first insulating component and the second insulating component. Therefore, when the first insulating component and the second insulating component are connected to each other to form the connection portion, the separator of the electrode assembly is not damaged by the formation of the connection portion. Consequently, it reduces the risk of short-circuiting within the battery cell due to damage to the separator of the electrode assembly, thus improving the safety of the battery.

According to some embodiments of the present disclosure, the first end surface comprises a first region, wherein the first region extends beyond the outer peripheral surface of the first insulating component and corresponds to a position of the connection portion along a thickness direction of the end cap. At least a portion of the restraining component covers the first region.

In the above embodiment, at least a portion of the restraining component covers the first region, which can enable the separator corresponding to the first region not to be located between the first insulating component and the second insulating component, thereby avoiding the separator from being damaged when it is subjected to force during the connection between the first insulating component and the second insulating component, and reducing the risk of short-circuiting within the battery cell.

According to some embodiments of the present disclosure, a side of the first insulating component facing the first end surface is provided with a protrusion, and the second insulating component is connected to an outer peripheral surface of the protrusion to form the connection portion. The first region extends beyond the outer peripheral surface of the protrusion.

In the above embodiment, by providing the protrusion, it is possible to conveniently allow the second insulating component to connect with the first insulating component, thus reducing the difficulty of connection.

According to some embodiments of the present disclosure, the first end surface further comprises a second region abutting the protrusion, wherein along a direction of the electrode assembly pointing towards the end cap, the first region does not extend beyond the second region.

In the above solution, a plane where the second region is located is coplanar with a plane where an end face of the protrusion facing the electrode assembly is located. Thus, by arranging the first region to not extend beyond the second region, it can avoid the separator corresponding to the first region from being positioned between the first insulating component and the second insulating component, thus preventing it from being impacted, stretched, and torn due to the connection between the first insulating component and the second insulating component. Therefore, the battery cell is ensured to have a high level of safety.

According to some embodiments of the present disclosure, along a direction of the electrode assembly pointing toward the end cap, the first region is aligned with the second region.

By arranging the first region to be aligned with the second region, it can avoid the separator corresponding to the first region from being positioned between the first insulating component and the second insulating component, thus preventing it from being impacted, stretched, and torn due to the connection between the first insulating component and the second insulating component. The battery cell is ensured to have a high level of safety.

According to some embodiments of the present disclosure, along a direction of the electrode assembly pointing towards the end cap, the first region is lower than the second region.

In the above solution, a plane where the second region is located is coplanar with a plane where an end face of the protrusion facing the electrode assembly is located. Thus, by arranging the first region to be lower than the second region, it can effectively enable the separator corresponding to the first region not to be located between the first insulating component and the second insulating component, thus preventing it from being impacted, stretched, and torn due to the connection between the first insulating component and the second insulating component. Therefore, the battery cell is ensured to have a high level of safety.

According to some embodiments of the present disclosure, at least a portion of the restraining component covers the first region and the second region, and the protrusion abuts against the second region through the restraining component.

In the above embodiment, both the first region and the second region are constrained by the restraining component to ensure that no separator is arranged between the first insulating component and the second insulating component, thus ensuring the safety of the separator.

According to some embodiments of the present disclosure, the electrode assembly further comprises a second end surface away from the end cap and a side surface connecting the first end surface and the second end surface. The restraining component comprises a main body portion and two end portions, wherein the main body portion connects the two end portions. The main body portion is arranged between the first end surface and the first insulating component, and the two end portions are arranged between the side surface and the second insulating component.

In the above embodiment, by arranging the two end portions of the restraining component between the side surface and the second insulating component, it provides a pulling force to the main body portion of the restraining component. This ensures effective constraint on at least a portion of the first end surface by the main body portion, and thus, it is ensured that the separator of the electrode assembly will not be inserted between the first insulating component and the second insulating component at the connection portion.

According to some embodiments of the present disclosure, the electrode assembly is in a flat shape. The side surface comprises a first side surface and a second side surface opposite each other along a thickness direction of the electrode assembly. The two end portions, respectively, are provided between the first side surface and the second insulating component and between the second side surface and the second insulating component.

In the above embodiment, the shape of the restraining component is simple and easy to manufacture and assemble. The electrode assembly is of a flat wound body, and the restraining component is in the form of a U-shape. When assembling the restraining component, the two end portions of the restraining component are respectively arranged on the first side surface and the second side surface.

According to some embodiments of the present disclosure, along the thickness direction of the end cap, an area that the connection portion is projected on the first end surface is within a coverage region of the restraining component.

In the above embodiment, on the one hand, the restraining component can serve to limit the height of the separator of the electrode assembly so as to avoid the separator from being inserted between the first insulating component and the second insulating component at the connection portion. On the other hand, the restraining component can also serve as a protection for the separator of the electrode assembly so as to reduce the impact of external force on the separator of the electrode assembly when the first insulating component and the second insulating component are connected to each other.

According to some embodiments of the present disclosure, a dimension of the restraining component along a circumferential direction of the electrode assembly is L1 and a dimension of the connection portion along the circumferential direction of the electrode assembly is L2, satisfying a condition: L1 > L2.

In the above embodiment, along the circumferential direction of the electrode assembly, by setting the dimension of the restraining component to be larger than the dimension of the connection portion, the restraining component is enabled to effectively prevent the first insulating portion and the second insulating portion from impacting the separator of the electrode assembly when they are connected to each other.

According to some embodiments of the present disclosure, a region of the first end surface covered by the restraining component is recessed relative to other regions of the first end surface.

In the above solution, the region covered by the restraining component is the region of the first end surface corresponding to the connection portion (or, the region covered by the restraining component can be the region of the first end surface corresponding to the connection portion, and the region abutted by the first insulating component), and the other regions do not correspond to the connection portion. When the first insulating component and the second insulating component are connected to each other, the other regions are not affected. Therefore, in order to ensure the energy density of the battery cell, the other regions can protrude from the region covered by the restraining component.

According to some embodiments of the present disclosure, a concavity of the region covered by the restraining component on the first end surface compared to the other regions is h, satisfying a condition: 0.5mm ≤ h ≤ 4mm.

In the above solution, and in some embodiments, the concavity refers to a value of the depression of the region restrained by the restraining component compared to other regions, i.e., the value of the depression of the separator of the electrode assembly. When the value of the depression is greater than 4 mm, the separator covered by the restraining component is closer to the electrode sheet. On the one hand, it is possible to cause damage to the electrode sheets, and on the other hand, the isolation effect of the separator on the electrode sheets is reduced, which makes the risk of short-circuiting within the battery cell increase, thereby reducing the safety of the battery. When the value of the depression is less than 0.5 mm, the second region can be affected by the connection portion and can be pulled and torn by the force during the formation of the connection portion. Therefore, the present disclosure limits the value h of the concavity so that h satisfies a condition: 0.5 mm ≤ h ≤ 4 mm, thus reducing the influence of the connection portion on the electrode assembly under the condition of ensuring the safety of the battery.

According to some embodiments of the present disclosure, the restraining component is an insulating adhesive layer bonded to the electrode assembly.

In the above embodiment, the restraining component is an insulating adhesive layer, which can be quickly arranged on the electrode assembly by means of bonding, thereby improving the assembly efficiency of the battery cell.

According to some embodiments of the present disclosure, the electrode assembly is in a flat shape. A dimension of the first insulating component along the thickness direction of the electrode assembly is D1, and a thickness of the electrode assembly is D2, satisfying a condition: D1 < D2.

In the above embodiment, the thickness of the electrode assembly is larger than the dimension of the first insulating component along the thickness direction of the electrode assembly, thus enabling the battery cell to have a larger group margin and increasing the energy density of the battery.

According to some embodiments of the present disclosure, multiple connection portions are provided, and the multiple connection portions are provided at intervals along the circumferential direction of the first insulating component. Multiple restraining components are provided, and the multiple restraining components are provided in correspondence with the multiple connection portions.

In the above embodiment, multiple connection portions are provided to improve the connection strength of the first insulating component and the second insulating component. Multiple restraining components are provided so that the separator corresponding to the electrode assembly at the connection portion is not inserted between the first insulating component and the second insulating component at the corresponding connection portion.

According to some embodiments of the present disclosure, each restraining component corresponds to two connection portions.

In the above solution, and in some embodiments, the connection portions are provided in pairs, and each side of the electrode assembly is provided with one connection portion of each pair of connection portions so as to ensure uniform force between the first insulating component and the second insulating component. Therefore, in these embodiments, each pair of connection portions is provided with a restraining component correspondingly, which is able to effectively prevent the separator corresponding to each pair of connection portions from inserting between the first insulating component and the second insulating component.

According to some embodiments of the present disclosure, the electrode assembly is in a flat shape, and multiple restraining components are arranged at intervals along a first direction. The first direction, the thickness direction of the electrode assembly, and the thickness direction of the end cap are mutually perpendicular.

In the above solution, and in some embodiments, in order to ensure the connection stability of the first insulating component and the second insulating component, multiple connection portions are provided for the first insulating component and the second insulating component along the first direction. Therefore, multiple restraining components are correspondingly provided, thus ensuring that the separator of the electrode assembly is not affected during the mutual connection of the first insulating component and the second insulating component.

According to some embodiments of the present disclosure, along the direction of the electrode assembly pointing towards the end cap, the separator extends beyond the electrode sheet of the electrode assembly, and the separator forms the first end surface.

In the above solution, the electrode assembly includes an electrode sheet and a separator configured for isolating the electrode sheet. By extending the separator beyond the end surface of the electrode sheet, it ensures effective isolation of the electrode sheet by the separator.

According to some embodiments of the present disclosure, one end of the second insulating component is thermally fused with the outer peripheral surface of the first insulating component.

In the above solution, the second insulating component and the first insulating component are connected to each other by means of thermal fusion, which can improve the connection efficiency of the second insulating component and the first insulating component, and improve the manufacturing efficiency of the battery cell.

In a second aspect, the present disclosure provides a battery comprising: a box, and the battery cell according to any one of the embodiments described in the first aspect. The battery cell is arranged within the box.

In a third aspect, the present disclosure further provides an electric device comprising the battery according to the second aspect, which is configured to provide electrical energy.

The additional aspects and advantages of the present disclosure will be partially disclosed in the following description, while some may become evident from the description or be understood through practical implementation of the present disclosure.

### BRIEF DESCRIPTION OF DRAWINGS

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.
FIG. 1 is a schematic diagram of an electrode assembly, an end cap, a first insulating component, and a second insulating component in the prior art;
FIG. 2 is a simple schematic diagram of a vehicle in an embodiment of the present disclosure;
FIG. 3 is a schematic view of the structure of the battery of the vehicle of FIG. 2;
FIG. 4 is a three-dimensional exploded view of the battery cell provided in some embodiments of the present disclosure;
FIG. 5 is a schematic diagram of the end cap, the first insulating component, and the second insulating component in some embodiments of the present disclosure;
FIG. 6 is a sectional view of FIG. 4 in the A-A direction;
FIG. 7 is an enlarged view at location B in FIG. 5;
FIG. 8 is a schematic diagram of the end cap in some embodiments of the present disclosure;
FIG. 9 is an assembly diagram of the electrode assembly and the restraining component in some embodiments of the present disclosure;
FIG. 10 is an exploded view of the electrode assembly and the restraining component in some embodiments of the present disclosure; and
FIG. 11 is an internal schematic diagram of the electrode assembly in some embodiments of the present disclosure.

Reference Numerals: 10- battery cell; 11- shell; 12- electrode assembly; 13- end cap; 14-first insulating component; 15- second insulating component; 16- restraining component; 160-main body portion; 161- end portion; 17- connection portion; 18- current collecting component; 18a- tab; 19- electrode terminal; 120- first end surface; 120a- first region; 120b- second region; 120c- other region; 121- second end surface; 122- first side surface; 123- second side surface; 140- protrusion; 141- insulating body; 1000- vehicle; 100- battery; 200- controller; 300- motor; 20- box; 21- first box; 22- second box; X1- thickness direction of end cap; Y- first direction; Z-thickness direction of electrode assembly.

### DETAILED DESCRIPTION OF EMBODIMENTS

Implementations of the present disclosure are described in further detail below in connection with the drawings and embodiments. The detailed description and drawings of the following embodiments are provided for illustrative purposes to explain the principles of the present disclosure. However, they should not be construed to limit the scope of the present disclosure. The present disclosure is not restricted to the described embodiments.

Unless otherwise defined, all technical and scientific terms used herein have the same meaning as understood by those skilled in the art of the relevant technical field. The terms used herein are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings.

In the description of the embodiments of the present disclosure, the technical terms "first", "second", etc. are used solely for the purpose of distinguishing different objects and should not be construed as indicating or implying relative importance or suggesting a specific quantity, specific order, or hierarchical relationship of the indicated technical features. In the description of the embodiments of the present disclosure, "multiple" means at least two, such as two, three, etc., unless otherwise expressly and specifically limited.

The term "embodiment" used herein means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other. Those skilled in the art understand explicitly and implicitly that the embodiments described herein can be combined with other embodiments.

In the embodiments of the present disclosure, the term "and/or" is used as a way to describe the relationship between associated objects, indicating that there can be three possible relationships. For example, "A and/or B" can represent: the presence of A, the presence of both A and B, or the presence of B. Additionally, the character "/" in the present disclosure generally represents an "or" relationship between the preceding and following associated objects.

In the description of the embodiments of the present disclosure, the term "multiple" refers to two or more (including two).

Additionally, in the description of the embodiments of the present disclosure, technical terms, indicating orientations or positional relationships, such as "length", "width", "thickness", "inner", "outer", and "circumferential direction", are based on the orientations or positional relationships shown in the drawings. These terms are used for facilitating the description of the embodiments of the present disclosure and simplifying the description, and should not be construed as indicating or implying that the devices or components referred to must have specific orientations or be constructed and operated in specific orientations. Therefore, they should not be understood as limiting the embodiments of the present disclosure.

In the description of the embodiments of the present disclosure, unless otherwise expressly specified and limited, technical terms such as "provide", "link", "connect", "fix", and similar terms should be broadly interpreted. For example, they can be fixed connections, detachable connections, or integral connections. They can also be mechanical connections or electrical connections. They can also be direct connections or indirect connections through intermediate media. Furthermore, they can be internal connections within two components or the interaction between two components. Those of ordinary skill in the art can understand the meanings of the above terms in the embodiments of the present disclosure according to specific situations.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-lithium ion batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the embodiments of the present disclosure do not impose limitations on this aspect either. Battery cells are generally categorized into three types according to the encapsulation method: cylindrical battery cells, prismatic battery cells, and pouch battery cells.

The batteries mentioned in the embodiments of the present disclosure refer to a single physical module that comprises one or multiple battery cells to provide higher voltage and capacity. Batteries typically include a box configured to encapsulate one or more battery cells. The box serves to prevent liquids or other foreign substances from affecting the charging or discharging of the battery cells.

A battery cell comprises an electrode assembly and an electrolyte. The electrode assembly is composed of a positive electrode sheet, a negative electrode sheet, and a separator. The battery cells work primarily on the movement of metal ions between the positive electrode sheet and the negative electrode sheet. The positive electrode sheet comprises a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer. The positive electrode current collector not coated with the positive electrode active material layer serves as the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide. The negative electrode sheet comprises a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer. The negative electrode current collector not coated with the negative electrode active material layer serves as the negative electrode tab. The material of the negative electrode current collector can be copper, and the negative active material can be carbon or silicon, and so on. To ensure that there is no fuse blow during high current flow, multiple positive electrode tabs are provided and stacked together, and multiple negative electrode tabs are provided and stacked together. The material of the diaphragm can be PP (polypropylene) or PE (polyethylene), etc. The separator is configured to isolate the positive electrode sheet and the negative electrode sheet, thus avoiding the short circuit caused by the overlap of the positive electrode sheet and the negative electrode sheet. To ensure effective insulation of the separator, the separator extends beyond the positive electrode sheet and the negative electrode sheet along the height direction of the electrode assembly. Furthermore, the electrode assembly can be a wound structure or a stacked structure. The embodiments of the present disclosure are not limited herein.

The battery cell also includes a current collecting component, wherein the current collecting component is configured for electrically connecting the tab and the electrode terminal of the battery cell to deliver electrical energy from the electrode assembly to the electrode terminal, and through the electrode terminal to the outside of the battery cell. Multiple battery cells are electrically connected to each other by the busbar component, thus enabling series, parallel, or hybrid connection of the multiple battery cells.

In the related art, in the assembly process of the battery cell, it is necessary to insulate and isolate the electrode assembly from the shell within the battery cell to prevent contact between the electrode assembly and the shell, thus avoiding short circuits inside the battery cell. A commonly used insulation method includes using a first insulating component to insulate and isolate the electrode assembly from the end cap; wrapping the electrode assembly with the second insulating component, wherein the persons skilled in the art often use a lower plastic as the first insulating component and use insulating film as the second insulating component, wherein the insulating film can be a Mylar film; connecting the first insulating component to the second insulating component to fix the position of the second insulating component, wherein a position where the first insulating component and the second insulating component are connected to each other is the connection portion (for example, the first insulating component and the second insulating component are bonded to each other or thermally fused; when the first insulating component and the second insulating component are thermally fused to each other, the position where the first insulating component and the second insulating component are thermally fused to each other is the fusing portion); and placing the electrode assembly covered with the second insulating component into the shell, wherein the second insulating component is arranged between the electrode assembly and an inner wall of the shell. This achieves the insulation and isolation of the electrode assembly from the shell, thus ensuring the safety of the battery cell.

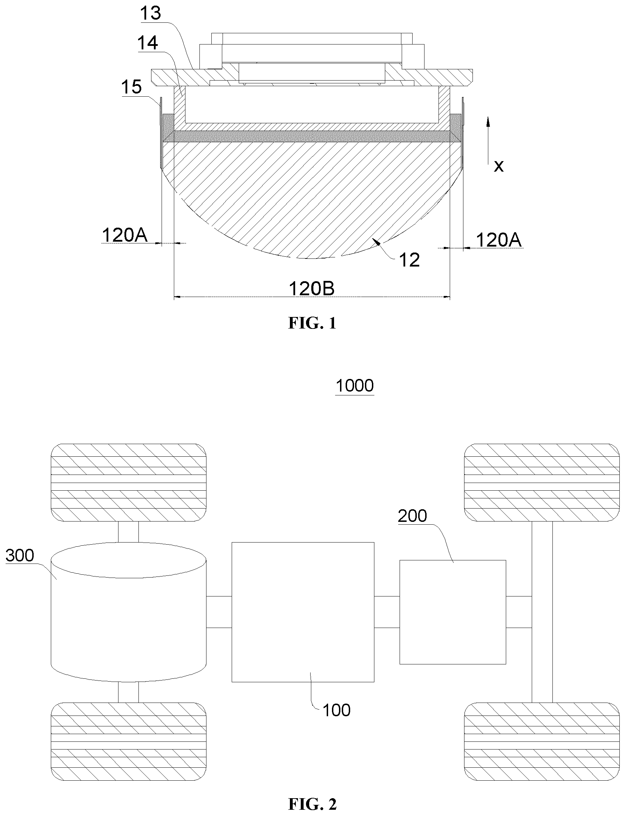

In the development of battery technology, how to improve the safety of batteries is a pressing technical issue in battery technology. The inventors discovered that during the assembly and inspection of battery cells, internal short circuits are often detected, where the short circuits can pose safety risks. Upon disassembling these battery cells, the inventors found that the separator inside the battery cell is damaged, thus causing the positive and negative electrode sheets to be lapped and resulting in an internal short circuit. Therefore, the inventors conducted research and found that the current demand for higher energy density in battery cells has led to increasingly limited internal space design and higher group margin (filling rate) in battery cells. Referring to FIG. 1, FIG. 1 is a schematic diagram of an electrode assembly, an end cap, a first insulating component, and a second insulating component in the prior art. When the group margin is relatively large, the first end surface 120 of the electrode assembly 12 facing the end cap 13, where the first end surface 120 is composed of the end portion of the separator, is provided with a first region 120A and a second region 120B. The second region 120B will be pressed against and compressed by the first insulating component 14. However, the first region 120A, as it extends beyond the periphery of the first insulating component 14, is not compressed by the first insulating component 14, thus being positioned between the first insulating component 14 and the second insulating component 15. In other words, a portion of the separator, since it is not compressed by the first insulating component 14, will be arranged between the first insulating component 14 and the second insulating component 15. When the first insulating component 14 and the second insulating component 15 are connected to each other (e.g., thermally fused to each other, or bonded to each other), the separator will be torn apart by the influence of the external force generated by the interconnection of the first insulating component 14 and the second insulating component 15. For example, when the first insulating component 14 and the second insulating component 15 are thermally fused to each other, a portion of the separator will be thermally fused together. Consequently, the vibration impact and the high temperatures generated by thermal fusion can cause the separator at this position to be stretched, thus leading to damage and tearing of the separator, such that the positive electrode sheet and negative electrode sheet cannot be effectively isolated, thus leading to the short circuits within the battery cell and impacting the safety of the battery.

In view of this, to avoid the tearing of the separator by the force when the first insulating component and the second insulating component are connected to each other, and to enhance the safety of the battery, the inventor, after thorough research, has designed a battery cell. The battery cell includes a restraining component, wherein the electrode assembly of the battery cell includes a first end surface facing the end cap. By arranging at least a portion of the restraining component between the first end surface and the first insulating component, the separator of the electrode assembly is limited from being inserted between the first insulating component and the second insulating component at the connection portion.

In the above solution, by arranging the restraining component to limit the separator of the electrode assembly, it is enabled that the separator corresponding to the connection portion (i.e., the separator corresponding to the first region) does not insert between the first insulating component and the second insulating component. This prevents the separator from being affected and torn when the first insulating component and the second insulating component are connected to each other, thereby ensuring the isolating and insulating effect of the separator. This reduces the risk of short circuits in the battery cell, thus allowing the battery to have a high level of safety.

It will be understood that the battery cell described in the embodiments of the present disclosure can directly power an electric device, or can be connected in parallel or in series to form a battery module or a battery to power various electric devices in the form of a battery module or a battery.

It is understandable that the embodiments of the present disclosure, the electric devices to which the battery cells, battery modules, or batteries are applicable, as described in embodiments of the present application, can take various forms. For example, they could be used in devices such as mobile phones, portable devices, laptops, electric bicycles, electric cars, ships, spacecraft, electric toys, and power tools, among others. Aerospace vehicles include airplanes, rockets, spaceplanes, and spacecraft, among others. Electric toys include stationary or mobile electric toys, for example, video game consoles, electric car toys, electric boat toys, and electric airplane toys. Electric tools include metal cutting electric tools, grinding electric tools, assembly electric tools, and railway electric tools, for example, electric drills, electric sanders, electric wrenches, electric screwdrivers, electric hammers, impact drills, concrete vibrators and electric planers, among others.

The battery cells, battery modules, or batteries described in the embodiments of the present disclosure are not limited to applying to the above-described electric devices, but can be applied to all electric devices using the battery cells, battery modules, and batteries. However, for the sake of simplicity of description, the following embodiments are described using an electric vehicle as an example.

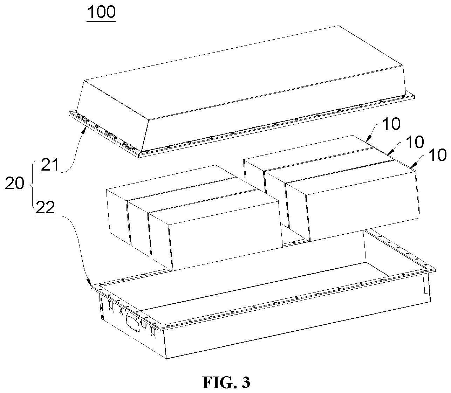

FIG. 2 is a simple schematic diagram of a vehicle in an embodiment of the present disclosure. FIG. 3 shows a schematic view of the structure of the battery of the vehicle of FIG. 2.

As shown in FIG. 2, the vehicle 1000 is provided therein with a battery 100, a controller 200, and a motor 300, for example, the battery 100 can be provided at the bottom, the front, or the rear of the vehicle 1000. The vehicle 1000 can be a gasoline-powered car, a natural gas car, or a new energy vehicle. The new energy vehicles can be pure electric cars, hybrid cars, or extended-range cars, etc.

In some embodiments of the present disclosure, the battery 100 is configured to provide power for the vehicle 1000. For instance, the battery 100 can serve as the operational power source for the vehicle 1000. The controller 200 is configured to manage the supply of power from the battery 100 to the motor 300, e.g., for working power requirements for starting, navigating, and driving the vehicle 1000. In other embodiments, the battery 100 serves not only as the operational power source for the vehicle 1000 but also as the driving power source for the vehicle 1000. It can replace or partially substitute for gasoline or natural gas to provide driving propulsion for the vehicle 1000.

The battery 100 mentioned in the embodiments of the present disclosure refers to a single physical module that comprises one or multiple battery cells 10 to provide higher voltage and capacity. Multiple battery cells 10 can be directly connected in series, parallel, or hybrid to directly form a battery 100. A hybrid connection refers to having both series and parallel connections among multiple battery cells 10. The multiple battery cells 10 can also be initially connected in series, parallel, or hybrid to form a battery module. The multiple battery modules can then be connected in series, parallel, or hybrid to form a battery 100.

As shown in FIG. 3, the battery 100 comprises multiple battery cells 10 and a box 20, wherein multiple battery cells 10 are housed the box 20. The box 20 comprises a first box 21 and a second box 22, wherein the first box 21 and the second box 22 form a battery cavity when they cover each other. Multiple modules of battery 100 are placed in the battery cavity. The shape of the first box 21 and the second box 22 can be based on the shape of the combinations of the multiple battery cells 10. The first box 21 and the second box 22 can both be provided with one opening. For example, the first box 21 and the second box 22 can be of hollow cuboid, wherein only one face of each is an open face. The openings of the first box 21 and the second box 22 are provided opposite to each other, and the first box 21 and the second box 22 are snapped together to form a box 20 with a closed cavity. The multiple battery cells 10 are arranged in parallel, series, or hybrid with each other inside the box 20 formed by snapping the first box 21 with the second box 22.

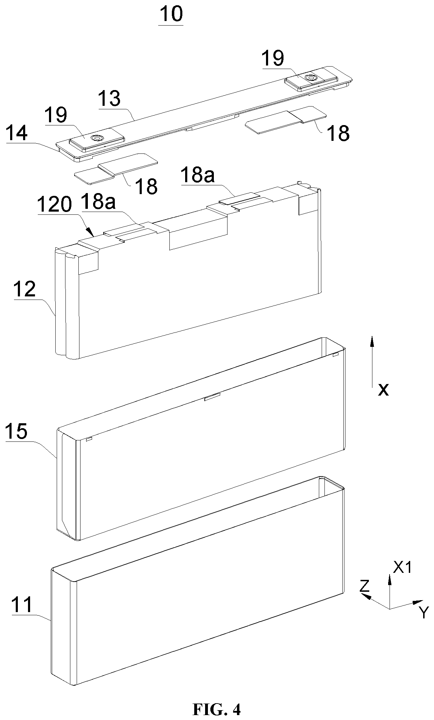

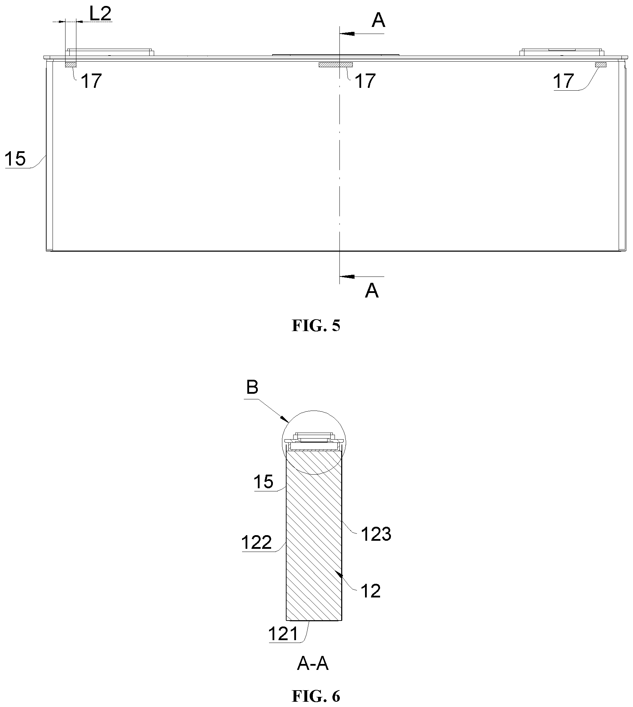

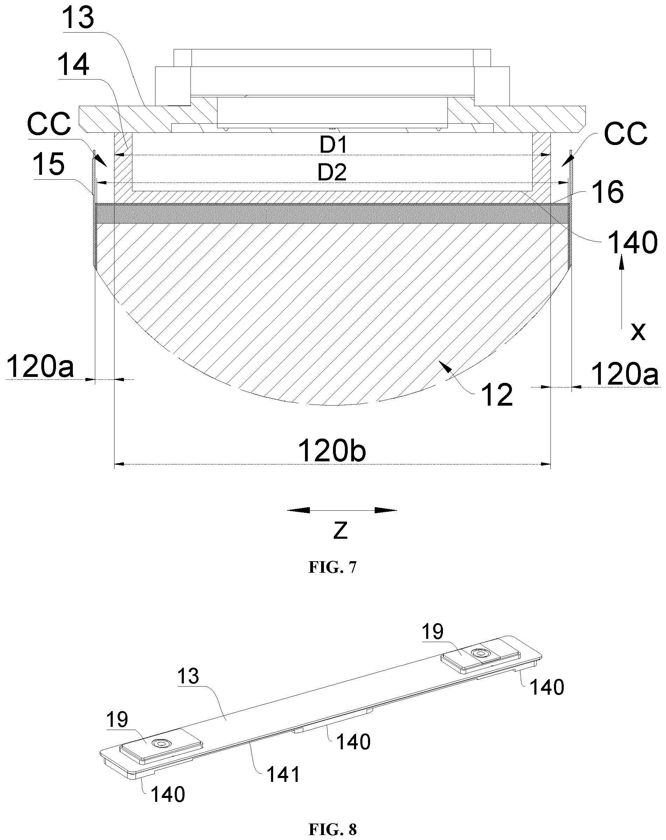

According to some embodiments of the present disclosure, with reference to FIG. 4 to FIG. 7, FIG. 4 is a three-dimensional exploded view of the battery cell 10 provided in some embodiments of the present disclosure; FIG. 5 is a schematic diagram of the end cap, the first insulating component, and the second insulating component in some embodiments of the present disclosure; FIG. 6 is a sectional view of FIG. 5 in the A-A direction; and FIG. 7 is an enlarged view of location B in FIG. 6.

The battery cell 10 includes a shell 11, an electrode assembly 12, an end cap 13, a first insulating component 14, a second insulating component 15, and a restraining component 16. The shell 11 is provided with an opening. The electrode assembly 12 is arranged within the shell 11, wherein the electrode assembly 12 is provided with a first end surface 120 facing the end cap 13. The end cap 13 covers the opening. The first insulating component 14 is provided between the electrode assembly 12 and the end cap 13. The second insulating component 15 wraps the electrode assembly 12, wherein an end of the second insulating component 15 is connected to an outer peripheral surface of the first insulating component 14 to form a connection portion 17.

A portion of the restraining component 16 is arranged between the first end surface 120 and the first insulating component 14, wherein the restraining component 16 is configured to limit an insertion of a separator of the electrode assembly 12 between the first insulating component 14 and the second insulating component 15 at the connection portion 17.

As in FIG. 4, a current collecting component 18 is also shown in FIG. 4, wherein the current collecting component 18 is configured for connecting the tab 18a of the electrode assembly 12 to the electrode terminal 19 on the end cap 13.

The first insulating component 14 can be a plastic member, a silicone member, or a plastic cement member, which is configured for insulating and isolating the end cap 13 from the electrode assembly 12. In some embodiments of the present disclosure, the first insulating component 14 is a lower plastic, which further insulates and isolates the end cap 13 from the current collecting component 18 on the basis of the insulation and isolation between the electrode assembly 12 and the end cap 13. This prevents the current collecting component 18 from contacting with the end cap 13, thus avoiding short circuits in the battery cell 10. In other embodiments, the first insulating component 14 can also refer to a component, in conjunction with other applications, having the function of insulating and isolating the electrode assembly 12 from the end cap 13. No further limitations are made herein.

The second insulating component 15 can be of a sheet material or a film material; it can be of a soft material or a hard material; and it can be of a plastic member, a silicone member, or a plastic cement member. In some embodiments of the present disclosure, the second insulating component 15 is a Mylar film. In other embodiments, the second insulating component 15 can also be a plastic insulating sheet. The second insulating component 15 wraps around the outer peripheral surface of the electrode assembly 12. Along a direction of the electrode assembly 12 pointing toward the end cap 13, where the direction of the electrode assembly 12 pointing toward the end cap 13 is illustrated in the figure by a label x plus an arrow, the second insulating component 15 will extend beyond the first end surface 120 of the electrode assembly 12 so as to be able to connect with the first insulating component 14.

The connection portion 17 can refer to a portion where the outer peripheral surface of the first insulating component 14 and the second insulating component 15 are connected with each other.

The first end surface 120 refers to an end surface formed by the portion of the separator of the electrode assembly 12 that extends beyond the electrode sheet in the direction of the electrode assembly 12 pointing toward the end cap 13, where the end surface is also an end surface of the electrode assembly 12 facing the end cap 13.

The restraining component 16 is a component that is at least partially arranged between the first end surface 120 and the first insulating component 14, wherein the restraining component 16 is configured to restrict at least a portion of the separator of the electrode assembly 12, thus ensuring that there are no components of the separator between the first insulating component 14 and the second insulating component 15.

In some embodiments, the restraining component 16 can compress the separator of the first end surface 120 by its own gravity so that there is no separator between the first insulating component 14 and the second insulating component 15. Alternatively, in some embodiments, the restraining component 16 is connected to the first insulating component 14. When assembling the first insulating component 14, the restraining component 16 can abut against the first end surface 120 along with the first insulating component, thereby ensuring that there is no separator between the first insulating component 14 and the second insulating component 15. Alternatively, in some embodiments, a portion of the restraining component 16 is provided in a region of the first end surface 120, which corresponds between the first insulating component 14 and the second insulating component 15. The other part of the restraining component 16 is connected to other positions, not corresponding to the region between the first insulating component 14 and the second insulating component 15, of the electrode assembly 12. This achieves the effect of ensuring that there is no separator between the first insulating component 14 and the second insulating component 15.

In the above embodiment, the first end surface 120 of the electrode assembly 12 is restrained by providing the restraining component 16, so that the separator of the electrode assembly 12 is not located between the first insulating component 14 and the second insulating component 15. Therefore, when the first insulating component 14 and the second insulating component 15 are connected with each other to form a connection portion, the separator of the electrode assembly 12 is not impacted and damaged by the formation of the connection portion 17. This reduces the risk of short circuits within the battery cell 10 due to damage to the separator of the electrode assembly 12, thereby improving the safety of the battery.

According to some embodiments of the present disclosure, the first end surface 120 includes a first region 120a. The first region 120a extends beyond the outer peripheral surface of the first insulating component 14 and corresponds to the position of the connection portion 17 along the thickness direction of the end cap 13. At least a portion of the restraining component 16 covers the first region 120a.

The thickness direction of the end cap 13 is shown in the figure by the label X1 plus an arrow.

The first region 120a is a region of the first end surface 120 that extends beyond the outer peripheral surface of the first insulating component 14 and corresponds to the connection portion 17 along the direction of the electrode assembly 12 pointing toward the end cap 13. In FIG. 7, the position in which the connection portion 17 is located is indicated by the label CC.

For a clear understanding of the first region 120a, referring to FIGS. 1 and 7,

as in FIG. 1, in some current battery cells, the first insulating component 14 will abut against the first end surface 120 of the electrode assembly 12 to cause the second region 120B to be compressed when the battery cell is assembled. However, due to a larger group margin of some current battery cells, the first end surface 120 will have a region that extends beyond the first insulating component 14, i.e., the region that cannot be covered by the projection of the first insulating component 14. Along the direction of the electrode assembly 12 pointing toward the end cap 13, the region corresponds to the position of the connection portion 17. The region is referred to as the first region 120A. The first region 120A, as it is not compressed by the first insulating component 14, will extend beyond the first region 120a (beyond the lower edge of the first insulating component 14). That is, a portion of the separator corresponding to the region is located between the first insulating component 14 and the second insulating component 15, which can be impacted, torn, and damaged when the connection portion 17 is formed. Therefore, in order to solve this problem, as in FIG. 7, in some embodiments of the present disclosure, by covering at least a portion of the restraining component 16 on the first region 120a, it is possible that the separator of the electrode assembly 12 is not located between the first insulating component 14 and the second insulating component 15.

In the above embodiment, at least a portion of the restraining component 16 covers the first region 120a, which can enable the separator corresponding to the first region 120a not to be located between the first insulating component 14 and the second insulating component 15, thereby avoiding the separator from being damaged when it is subjected to force during the connection between the first insulating component 14 and the second insulating component 15, and reducing the risk of short-circuiting within the battery cell 10.

According to some embodiments in the present disclosure, in conjunction with FIGS. 4 and 8, FIG. 8 is a schematic diagram of the end cap in some embodiments of the present disclosure.

A protrusion 140 is formed on the side of the first insulating component 14 facing the first end surface 120, and the second insulating component 15 is connected to the outer peripheral surface of the protrusion 140 to form the connection portion 17. The first region 120a extends beyond the outer peripheral surface of the protrusion 140.

The first insulating component 14 includes an insulating body 141 and a protrusion 140, wherein the insulating body 141 is annular in shape and arranged in a surrounding manner on an end surface of the end cap 13 facing the electrode assembly 12. The protrusion 140 is a component that protrudes, compared to the insulation body 141, along the direction of the end cap 13 pointing toward the electrode assembly 12, which provides a larger contact area so as to allow the first insulating component 14 to be readily connected to the second insulating component 15.

In the above embodiment, by providing the protrusion 140, it is possible to conveniently enable the second insulating component 15 to connect with the first insulating component 14, thus reducing the difficulty of connection.

According to some embodiments of the present disclosure, in conjunction with FIG. 7, the first end surface 120 further comprises a second region 120b abutting the protrusion 140, wherein along a direction of the electrode assembly 12 pointing towards the end cap 13, the first region 120a does not extend beyond the second region 120b.

The second region 120b is a region of the first end surface 120 corresponding to the protrusion 140 of the first insulating component 14, and the second region 120b will be abutted or compressed by the protrusion 140 of the first insulating component 14.

In some embodiments, the plane in which the first region 120a is located does not extend beyond the plane in which the second region 120b is located. For example, the two planes are coplanar, or the plane in which the first region 120a is located is lower than the plane in which the second region 120b is located. Since the second region 120b is a portion that is abutted by the protrusion of the first insulating component 14, the first region 120a is not impacted by the formation of the connection portion 17 when the first region 120a does not extend beyond the second region 120b.

According to some embodiments of the present disclosure, along a direction of the electrode assembly 12 pointing toward the end cap 13, the first region 120a is aligned with the second region 120b.

In the above solution, a plane where the second region 120b is located does not extend beyond a plane where an end face of the protrusion 140 facing the electrode assembly 12 is located. Thus, by arranging the first region 120a to be aligned with the second region 120b, it can avoid the separator corresponding to the first region 120a from being positioned between the first insulating component 14 and the second insulating component 15, thus preventing it from being impacted, stretched, and torn due to the connection between the first insulating component 14 and the second insulating component 15. Therefore, the battery cell 10 is ensured to have a high level of safety.

In some embodiments, the second region 120b can be abutted and compressed by the protrusion 140, thus achieving alignment with the first region 120a. In other embodiments, both the second region 120b and the first region 120a can be restrained by the restraining component 16 to achieve parallelism.

In the above solution, a plane where the second region 120b is located is coplanar with a plane where an end face of the protrusion 140 facing the electrode assembly 12 is located. Thus, by arranging the first region 120a to be aligned with the second region 120b, it can avoid the separator corresponding to the first region 120a from being positioned between the first insulating component 14 and the second insulating component 15, thus preventing it from being impacted, stretched, and torn due to the connection between the first insulating component 14 and the second insulating component 15. Therefore, the battery cell 10 is ensured to have a high level of safety.

According to some embodiments of the present disclosure, along a direction of the electrode assembly 12 pointing toward the end cap 13, the first region 120a is lower than the second region 120b.

In some embodiments, the first region 120a is lower than the second region 120b by being restrained by the restraining component 16. In other embodiments, the restraining component 16 can restrain both the first region 120a and the second region 120b, but the restraining force on the first region 120a is greater than the restraining force on the second region 120b, which in turn allows the first region 120a to be lower than the second region 120b.

In the above embodiment, the plane where the second region 120b is located is coplanar with the plane where the end face of the protrusion 140 facing the electrode assembly 12 is located. Therefore, by arranging the first region 120a lower than the second region 120b, the separator corresponding to the first region 120a is kept as far away as possible from the connection portion 17. This minimizes the risk of short circuits within the battery cell 10 due to damage to the separator, thereby ensuring a higher level of safety for the battery cell.

According to some embodiments of the present disclosure, at least a portion of the restraining component 16 covers the first region 120a and the second region 120b, and the protrusion 140 abuts against the second region 120b through the restraining component 16.

In the above embodiment, both the first region 120a and the second region 120b are constrained by the restraining component 16 to ensure that no separator is arranged between the first insulating component 14 and the second insulating component 15, thus ensuring the safety of the separator.

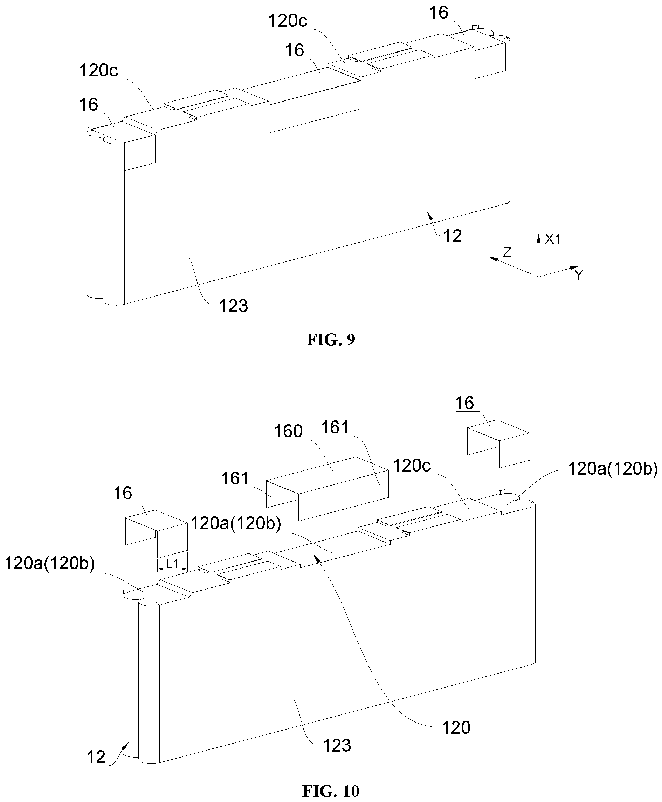

According to some embodiments of the present disclosure, with reference to FIGS. 6, 7, 9, and 10, FIG. 9 is an assembly diagram of the electrode assembly and the restraining component in some embodiments of the present disclosure; and FIG. 10 is an exploded view of the electrode assembly and the restraining component in some embodiments of the present disclosure. The electrode assembly 12 further comprises a second end surface 121 away from the end cap 13 and a side surface connecting the first end surface 120 and the second end surface 121. The restraining component 16 comprises a main body portion 160 and two end portions 161, wherein the main body portion 160 connects the two end portions 161. The main body portion 160 is arranged between the first end surface 120 and the first insulating component 14, and the two end portions 161 are arranged between the side surface and the second insulating component 15.

In some embodiments, the second end surface 121 can be a bottom surface if the first end surface 120 is a top surface.

The side surface can refer to a face enclosing the edges of the first end surface 120 and the second end surface 121. The face on which the side surface is located can be perpendicular to the face on which the first end surface 120 is located.

Referring to the restraining component 16 of FIG. 10, the restraining component 16 includes a main body portion 160 and two end portions 161. In conjunction with FIGS. 7, 9, and 10, the main body portion 160 is arranged on the first end surface 120. The main body portion 160 is capable of covering at least a portion of the region of the first end surface 120, and the at least a portion of the region covered by the main body portion 160 is restrained by the restraining component 16. Therefore, the separator corresponding to the restrained portion is not located between the first insulating component 14 and the second insulating component 15. In some embodiments, the "restrained portion" described above can be the first region 120a, or the first region 120a and the second region 120b, or the entire first end surface 120. For example, in some embodiments, the main body portion 160 covers the first region 120a; in other embodiments, the main body portion 160 is capable of covering both the first region 120a and the second region 120b; or in some embodiments, the main body portion 160 is capable of covering the entire first end surface 120.

The end portion 161 is a member connected to the main body portion 160, and the end portion 161 is a member provided between the side surface and the second insulating component 15. In some embodiments, the end portion 161 can be connected to a side surface of the electrode assembly 12 to ensure that the main body portion 160 restrains the first region 120a, or the second region 120b and the first region 120a. In other embodiments, the end portion 161 can be connected to the second insulating component 15, similarly ensuring that the main body portion 160 restrains the first region 120a, or the second region 120b and the first region 120a.

In the above embodiment, by arranging the two end portions 161 of the restraining component 16 between the side surface and the second insulating component 15, it provides a pulling force to the main body portion 160 of the restraining component 16. This ensures effective constraint on at least a portion of the first end surface 120 by the main body portion 160, and thus, it is ensured that the separator of the electrode assembly 12 will not be located between the first insulating component 14 and the second insulating component 15.

According to some embodiments of the present disclosure, as shown in FIGS. 6 and 10, the electrode assembly 12 is in a flat shape. The side surface comprises a first side surface 122 and a second side surface 123 opposite each other along a thickness direction of the electrode assembly 12. The two end portions 161, respectively, are provided between the first side surface 122 and the second insulating component 15 and between the second side surface 123 and the second insulating component 15.

In some embodiments, the electrode assembly 12 can be formed by stacking multiple flat wound bodies in the thickness direction of the flat wound bodies. As shown in FIG. 10, the electrode assembly 12 in the figure is formed by stacking two flat wound bodies. In other embodiments, the electrode assembly 12 can be one flat wound body.

As shown in FIG. 10, the electrode assembly 12 is provided with four side surfaces, wherein the two side surfaces with the larger area are the first side surface 122 and the second side surface 123, and the side surface connecting the first side surface 122 and the second side surface 123 is a curved surface. In the battery cells 10 provided in some embodiments of the present disclosure, because of the larger group margin, the thickness of the electrode assembly 12 is larger than the dimension of the first insulating component 14 in the thickness direction of the electrode assembly 12. As in FIG. 7, the second region 120b is closely adjacent to the first region 120a along the thickness direction of the electrode assembly 12.

As in FIG. 10, the restraining component 16 is in the form of a U-shape. Along the thickness direction of the electrode assembly 12, the main body portion 160 is located between two end portions 161, the plane in which each of the two end portions 161 is located is perpendicular to the plane in which the main body portion 160 is located, and the planes in which the two end portions 161 are located are parallel to each other.

In the above embodiment, the shape of the restraining component 16 is simple and easy to manufacture and assemble. The electrode assembly 12 is in the form of a flat wound body, and the restraining component 16 is in the form of a U-shape. When assembling the restraining component 16, the two end portions 161 of the restraining component 16 are respectively arranged on the first side surface 122 and the second side surface 123.

In some embodiments, when the restraining component 16 is not assembled, the restraining component 16 can be in a shape of " 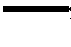 ". That is, the two end portions 161 and the main body portion 160 are in the same plane. During the assembly of the restraining component 16, pressure can be applied to the end portion 161 on each side of the main body portion 160, causing the two end portions 161 to bend under the applied force so that they are perpendicular to the main body portion 160, respectively.

According to some embodiments of the present disclosure, along the thickness direction of the end cap 13, an area that the connection portion 17 is projected on the first end surface 120 is within a coverage region of the restraining component 16.

"an area that the connection portion 17 is projected on the first end surface 120" means that along the direction along the end cap 13 pointing toward the electrode assembly 12, a portion, at which the first insulating component 14 and the second insulating component 15 are thermally fused to each other and connected to each other, has a projection on the first end surface 120 in the region where the restraining component 16 covers the first end surface 120, for example, a region corresponding to the first region 120a. Therefore, the restraining component 16 can effectively isolate the first end surface 120 and the connection portion 17.

In the above embodiment, on the one hand, the restraining component 16 can serve to limit the height of the separator of the electrode assembly 12 so as to avoid the separator from being inserted between the first insulating component 14 and the second insulating component 15. On the other hand, the restraining component 16 can also serve as a protection for the separator of the electrode assembly 12 so as to reduce the impact of the external force, generated during the connection of the first insulating component 14 and the second insulating component 15, on the electrode assembly 12.

According to some embodiments of the present disclosure, a dimension of the restraining component 16 along a circumferential direction of the electrode assembly 12 is L1 and a dimension of the connection portion 17 along the circumferential direction of the electrode assembly 12 is L2, satisfying a condition: L1 > L2.

Referring to FIG. 5 and in conjunction with FIG. 10, in FIG. 5, a dimension L2 of one of the connection portions 17, along the circumferential direction of the electrode assembly 12, is identified, and in FIG. 10, a dimension L1 of the restraining component along the circumferential direction of the electrode assembly 12, corresponding to the "one of the connection portions 17", is identified.

When the electrode assembly 12 is in a flat shape, the circumferential direction of the electrode assembly 12 can be viewed as the length direction of the electrode assembly 12. The dimension of the restraining component 16 along a circumferential direction of the electrode assembly 12 is greater than the dimension of the connection portion 17 along the circumferential direction of the electrode assembly 12, which can be understood that along the length direction of the electrode assembly 12, the dimension of the restraining component 16 is greater than the dimension of the connection portion 17. At the same time, the dimension of the restraining component 16 in the length direction of the electrode assembly 12 should be determined to not affect the connection of the first insulating component 14 and the second insulating component 15.

In the above embodiment, along the circumferential direction of the electrode assembly 12, by setting the dimension of the restraining component 16 to be larger than the dimension of the connection portion 17, the restraining component 16 is enabled to effectively prevent the first insulating portion and the second insulating portion from impacting the electrode assembly 12 when they are connected to each other.

According to some embodiments of the present disclosure, referring to FIG. 9, a region of the first end surface 120 covered by the restraining component 16 is recessed relative to other regions 120c of the first end surface 120.

As in FIG. 9, in some embodiments, there is a region of the first end surface 120 that does not contact the first insulating component 14 and does not correspond to the connection portion 17. The region, not being affected by thermal fusion, can not be restrained by the restraining component 16, and therefore, can protrude further than the region covered by the restraining component 16.

In the above embodiment, the region covered by the restraining component 16 is the region of the first end surface 120 corresponding to the connection portion 17; or, the region covered by the restraining component 16 can be, for example, the region of the first end surface 120 corresponding to the connection portion 17, and the region abutted by the first insulating component 14. The other regions 120c do not correspond to the connection portion 17. When the first insulating component 14 and the second insulating component 15 are connected to each other, the other regions 120c are not affected. Therefore, in order to ensure the energy density of the battery cell 10, the other regions 120c can protrude from the region covered by the restraining component 16.

In some other embodiments, the portion of the separator corresponding to the first end surface 120 can all be covered by the restraining component 16 so as to be integrally depressed, compared to when it is not restrained.

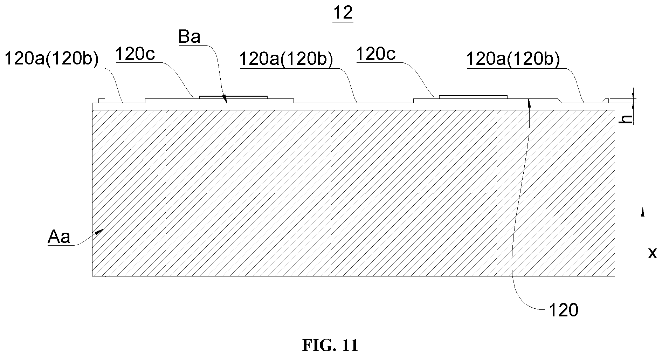

According to some embodiments of the present disclosure, with reference to FIG. 11, FIG. 11 is an internal schematic diagram of the electrode assembly 12 in some embodiments of the present disclosure.

A concavity of the region covered by the restraining component 16 on the first end surface 120 compared to the other regions 120c is h, satisfying a condition: 0.5mm ≤ h ≤ 4mm.

The concavity can refer to the amount by which the first end surface 120 is compressed, or it can refer to the difference between the plane where the second region 120b is located (the plane where the second region 120b is located can be the lowest plane of the first end surface 120) and the plane where the highest region of the first end surface 120 is located.

In some embodiments, h can take the value of 0.5mm, 0.6mm, 0.7mm, 0.8mm, 0.9mm...3.8mm, 3.9mm, or 4mm.

In the above solution, and in some embodiments, the concavity refers to a value of the depression of the region restrained by the restraining component 16 compared to other regions 120c, i.e., the value of the depression of the separator of the electrode assembly 12. When the value of the depression is greater than 4 mm, the separator covered by the restraining component 16 is closer to the electrode sheet. On the one hand, it is possible to cause damage to the electrode sheets, and on the other hand, the isolation effect of the separator on the electrode sheets is reduced, which makes the risk of short circuits within the battery cell 10 increase, thereby reducing the safety of the battery. When the value of the depression is less than 0.5 mm, the second region 120b can have an impact on the connection portion 17, which is pulled and torn when the first insulating component 14 and the second insulating component 15 are connected to each other. Therefore, the present disclosure limits the value h of the concavity so that h satisfies a condition: 0.5 mm ≤ h ≤ 4 mm, thus reducing the influence of the fusion welding on the electrode assembly 12 under the condition of ensuring the safety of the battery.

According to some embodiments of the present disclosure, the restraining component 16 is an insulating adhesive layer bonded to the electrode assembly 12.

The insulating adhesive layer refers to a component that is adhesive and has insulating properties, which is able to be bonded to the side surface and the first end surface 120 of the electrode assembly 12. This realizes that the second region 120b does not extend beyond the first region 120a.

In the above embodiment, the restraining component 16 is an insulating adhesive layer, which can be quickly arranged on the electrode assembly 12 by means of bonding, thereby improving the assembly efficiency of the battery cell 10.

In some other embodiments, the restraining component 16 can be other components that can serve to restrain at least a portion of the region of the first end surface 120. For example, the restraining component 16 can be a sheet, plate, or membrane material provided to the electrode assembly 12 by welding; or the restraining component 16 can be a sheet, plate, or membrane material provided to the electrode assembly 12 by adhesive material in a bonding manner.

According to some embodiments of the present disclosure, with reference to FIG. 7, the electrode assembly 12 is in a flat shape. A dimension of the first insulating component 14 along the thickness direction of the electrode assembly 12 is D1, and a thickness of the electrode assembly 12 is D2, satisfying a condition: D1 < D2.

In the above embodiment, the thickness of the electrode assembly 12 is larger than the dimension of the first insulating component 14 along the thickness direction of the electrode assembly 12, thus enabling the battery cell 10 to have a larger group margin and increasing the energy density of the battery.

According to some embodiments of the present disclosure, with reference to FIGS. 5, 9, and 10, multiple connection portions 17 are provided, and the multiple connection portions 17 are provided at intervals along the circumferential direction of the first insulating component 14. Multiple restraining components 16 are provided, and the multiple restraining components 16 are provided in correspondence with the multiple connection portions 17.

In some embodiments, multiple connection portions 17 are provided between the first insulating component 14 and the second insulating component 15 to ensure the stability of the connection between the first insulating component 14 and the second insulating component 15. As in FIG. 8, it can be seen from FIG. 8 that the first insulating component 14 is provided with multiple protrusions 140, wherein the multiple protrusions 140 are arranged at intervals along the length direction of the end cap 13. The protrusion 140 can abut against the first end surface 120, wherein a portion of the protrusion 140 abutting the first end surface 120 can be the second region 120b. The outer peripheral surface of the protrusion 140 can be connected to the second insulating component 15 to form the connection portion 17. Therefore, since multiple connection portions 17 are provided, in order to avoid insertion of the separator between the first insulating component 14 and the second insulating component 15, multiple restraining components 16 are provided to correspondingly restrain the separators of the first end surface 120. It is ensured that there is no separator between the first insulating component 14 and the second insulating component 15.

In the above embodiment, multiple connection portions 17 are provided to improve the connection strength of the first insulating component 14 and the second insulating component 15. Multiple restraining components 16 are provided so that the separator corresponding to the electrode assembly 12 at the connection portion 17 is not inserted between the first insulating component 14 and the second insulating component 15 at the corresponding connection portion 17.

According to some embodiments of the present disclosure, each restraining component 16 corresponds to two connection portions 17.

In the above solution, and in some embodiments, the connection portions 17 are provided in pairs, and each side of the electrode assembly 12 is provided with one connection portion of each pair of connection portions 17 so as to ensure uniform force between the first insulating component 14 and the second insulating component 15. As in FIG. 5, FIG. 5 shows only three connection portions 17 on one side of the electrode assembly 12, with the same three connection portions 17 on the other side. Therefore, in these embodiments, each pair of connection portions 17 is provided with a restraining component 16 correspondingly, which is able to effectively prevent the separator corresponding to each pair of connection portions 17 from inserting between the first insulating component 14 and the second insulating component 15.

According to some embodiments of the present disclosure, the electrode assembly is in a flat shape. As shown in FIGS. 4 and 9, multiple restraining components 16 are arranged at intervals along a first direction Y. The first direction Y, the thickness direction Z of the electrode assembly 12, and the thickness direction X1 of the end cap 13 are mutually perpendicular.

In the above solution, and in some embodiments, in order to ensure the connection stability of the first insulating component 14 and the second insulating component 15, multiple connection portions 17 are provided for the first insulating component 14 and the second insulating component 15 along the first direction. Therefore, multiple restraining components 16 are correspondingly provided, thus ensuring that the separator of the electrode assembly 12 is not affected during the mutual connection of the first insulating component 14 and the second insulating component 15.

According to some embodiments of the present disclosure, referring to FIG. 11, along the direction of the electrode assembly 12 pointing towards the end cap 13, the separator extends beyond the electrode sheet of the electrode assembly 12, and the separator forms the first end surface 120.

In FIG. 11, the region where the section line is located, along with the region indicated by the label Aa with the arrow, can be considered the region where the electrode sheets of the electrode assembly 12 are located. The separator extending beyond the electrode sheet is indicated by Bb with an arrow.

In the above solution, the electrode assembly 12 includes an electrode sheet and a separator configured for isolating the electrode sheet. By extending the separator beyond the end surface of the electrode sheet, it ensures effective isolation of the electrode sheet by the separator.

According to some embodiments of the present disclosure, one end of the second insulating component 15 is thermally fused with the outer peripheral surface of the first insulating component 14.

In the above solution, the second insulating component 15 and the first insulating component 14 are connected to each other by means of thermal fusion, which can improve the connection efficiency of the second insulating component 15 and the first insulating component 14, and improve the manufacturing efficiency of the battery cell 10.

According to some embodiments of the present disclosure, the present disclosure further provides a battery, which comprises a box and the battery cell 10 according to the described above, wherein the battery cell 10 is arranged in the box.

According to some embodiments of the present disclosure, the present disclosure further provides an electric device comprising the battery according to the described above, wherein the battery is configured to provide electrical energy.

According to some embodiments of the present disclosure, with reference to FIG. 4 to FIG. 11, the present disclosure further provides a battery cell 10. The battery cell 10 includes a shell 11, an electrode assembly 12, an end cap 13, a first insulating component 14, a second insulating component 15, and a restraining component 16.

The electrode assembly 12 is provided in the shell 11, and the opening of the shell 11 is covered by an end cap 13. The first insulating component 14 is a lower plastic provided in the end cap 13, and the second insulating component 15 is an insulating film wrapped around the outer periphery of the electrode assembly 12. One end of the insulating film is thermally fused to the protrusion 140 of the lower plastic to realize the fixation of the insulating film, and the part where the two are thermally fused is the connection portion 17.

The electrode assembly 12 comprises a positive electrode sheet, a negative electrode sheet, and a separator. The positive electrode sheet, the separator, and the negative electrode sheet are stacked by layers and wound to form a flat wound body. As in FIG. 10, the electrode assembly 12 can be formed by stacking two flat wound bodies. Along the height direction of the electrode assembly 12, the separator extends beyond the positive electrode sheet and the negative electrode sheet, and the end surface of the separator facing the end cap 13 is the first end surface 120 of the electrode assembly 12 facing the end cap 13. As in FIGS. 7, 9, and 10, the first end surface 120 includes a first region 120a, a second region 120b, and other regions 120c, wherein the first region 120a corresponds to the lower plastic and is abutted by the protrusion 140 of the lower plastic during assembly. As can be seen from FIG. 7, along the thickness direction Z of the electrode assembly 12, the second region 120b extends beyond the outer peripheral surface of the first insulating component 14 and corresponds to the connection portion 17. The other region 120c is the other region of the first end surface 120 excluding the first region 120a and the second region 120b.

As can be seen from FIGS. 6, 8, and 9, the first region 120a and the second region 120b are at the same height, and the other region 120c protrudes more than the first region 120a and the second region 120b. That is, the first region 120a and the second region 120b are recessed downward compared to the other region 120c, and the first region 120a and the second region 120b, compared to the other region 120c, are recessed downward by the restraint from the restraining component 16. The restraining component 16 can be an insulating adhesive layer. Before the insulating adhesive layer is bonded to the electrode assembly 12, the insulating adhesive layer can extend in the thickness direction of the electrode assembly 12, such that the middle part of the insulating adhesive layer is bonded to the first region 120a and the second region 120b. By applying downward force to the insulating adhesive layer, the first region 120a and the second region 120b are compressed and recessed downward. The two ends of the insulating adhesive layer are then bonded to the side surfaces of the electrode assembly 12, and the first region 120a and the second region 120b are flush. Since the second region 120b does not extend beyond the first region 120a, the separator corresponding to the second region 120b will not be impacted by the thermal fusion when the insulating film and the lower plastic are thermally fused to each other. This ensures the integrity of the separator of the electrode assembly 12 and effectively isolates the positive electrode sheet and the negative electrode sheet.

To ensure the stability of the connection between the insulating film and the lower plastic, the lower plastic is provided with multiple protrusions 140 along the length direction of the electrode assembly 12 (a diretion perpendicular to the thickness direction of the electrode assembly 12, and perpendicular to the height direction of the electrode assembly 12). Multiple thermal fusion points are formed between the protrusions 140 and the insulating film, that is, multiple connection portions 17 are provided. Therefore, by arranging multiple insulating adhesive layers corresponding to the multiple thermal fusion points, the separator is prevented from being impacted by multiple thermal fusion points. This effectively reduces the risk of short circuits within the battery cell 10, thereby enhancing the safety of the battery.

The battery cell 10 provided in some embodiments of the present disclosure can be assembled with the restraining component 16 first. It is enabled that the separator corresponding to the first region 120a and the second region 120b of the electrode assembly 12 is compressed and recessed downward first, and then the wrapping of the second insulating component 15 is carried out, which is not impacted by thermal fusion when the second insulating component 15 and the first insulating component 14 are thermally fused. This maintains the integrity of the separator, and consequently, effectively reduces the risk of short circuits within the battery cell 10, thereby making the battery 100 have a higher level of safety.

The above is only a preferred embodiment of the present disclosure, which is not intended to limit, and the present disclosure may have various changes and variations for those skilled in the art. Any modification, equivalent substitution, improvement, etc. made within the spirit and principles of the present disclosure shall be included in the scope of protection of the present disclosure.

## Claims

1. A battery cell, comprising:
a shell, provided with an opening;
an end cap, covering the opening;
an electrode assembly, arranged within the shell and provided with a first end surface facing the end cap;
a first insulating component, provided between the electrode assembly and the end cap;
a second insulating component, wrapping the electrode assembly, wherein an end of the second insulating component is connected to an outer peripheral surface of the first insulating component to form a connection portion; and
a restraining component, at least partially arranged between the first end surface and the first insulating component, wherein the restraining component is configured to limit an insertion of a separator of the electrode assembly between the first insulating component and the second insulating component at the connection portion.

2. The battery cell according to claim 1, wherein
the first end surface comprises a first region, and the first region extends beyond the outer peripheral surface of the first insulating component and corresponds to a position of the connection portion along a thickness direction of the end cap; and
at least a portion of the restraining component covers the first region.

3. The battery cell according to claim 2, wherein
a side of the first insulating component facing the first end surface is provided with a protrusion, and the second insulating component is connected to an outer peripheral surface of the protrusion to form the connection portion; and the first region extends beyond the outer peripheral surface of the protrusion.

4. The battery cell according to claim 3, wherein
the first end surface further comprises a second region abutting the protrusion, and along a direction of the electrode assembly pointing toward the end cap, the first region does not extend beyond the second region.

5. The battery cell according to claim 4, wherein
along the direction of the electrode assembly pointing toward the end cap, the first region is aligned with the second region.

6. The battery cell according to claim 4, wherein
along the direction of the electrode assembly pointing toward the end cap, the first region is lower than the second region.

7. The battery cell according to claim 4, wherein
at least a portion of the restraining component covers the first region and the second region, and the protrusion abuts against the second region through the restraining component.

8. The battery cell according to any one of claims 1 to 7, wherein
the electrode assembly further comprises a second end surface away from the end cap and a side surface connecting the first end surface and the second end surface; the restraining component comprises a main body portion and two end portions, wherein the main body portion connects the two end portions; the main body portion is arranged between the first end surface and the first insulating component; and the two end portions are arranged between the side surface and the second insulating component.

9. The battery cell according to claim 8, wherein
the electrode assembly is in a flat shape; the side surface comprises a first side surface and a second side surface opposite each other along a thickness direction of the electrode assembly; the two end portions, respectively, are provided between the first side surface and the second insulating component and between the second side surface and the second insulating component.

10. The battery cell according to any one of claims 1 to 9, wherein
along a thickness direction of the end cap, an area that the connection portion is projected on the first end surface is within a coverage region of the restraining component.

11. The battery cell according to claim 10, wherein
a dimension of the restraining component along a circumferential direction of the electrode assembly is L1 and a dimension of the connection portion along the circumferential direction of the electrode assembly is L2, satisfying a condition: L1 > L2.

12. The battery cell according to any one of claims 1 to 11, wherein
a region of the first end surface covered by the restraining component is recessed relative to other regions of the first end surface.

13. The battery cell according to claim 12, wherein
a concavity of the region covered by the restraining component on the first end surface compared to the other regions is h, satisfying a condition: 0.5mm ≤ h ≤ 4mm.

14. The battery cell according to any one of claims 1 to 13, wherein
the restraining component is an insulating adhesive layer bonded to the electrode assembly.

15. The battery cell according to any one of claims 1 to 14, wherein
the electrode assembly is in a flat shape; a dimension of the first insulating component along a thickness direction of the electrode assembly is D1, and a thickness of the electrode assembly is D2, satisfying a condition: D1 < D2.

16. The battery cell according to any one of claims 1 to 15, wherein
multiple connection portions are provided, and the multiple connection portions are provided at intervals along a circumferential direction of the first insulating component; and multiple restraining components are provided, and the multiple restraining components are provided in correspondence with the multiple connection portions.

17. The battery cell according to claim 16, wherein
each restraining component corresponds to two connection portions.

18. The battery cell according to claim 16 or 17, wherein
the electrode assembly is in a flat shape, and the multiple restraining components are arranged at intervals along a first direction; and the first direction, a thickness direction of the electrode assembly, and a thickness direction of the end cap are mutually perpendicular.

19. The battery cell according to any one of claims 1 to 18, wherein
along a direction of the electrode assembly pointing toward the end cap, the separator extends beyond an electrode sheet of the electrode assembly, and the separator forms the first end surface.

20. The battery cell according to any one of claims 1 to 19, wherein
one end of the second insulating component is connected to the outer peripheral surface of the first insulating component by fusion welding.

21. A battery, comprising:
a box; and
the battery cell according to any one of claims 1 to 20, wherein the battery cell is arranged in the box.

22. An electrical device, comprising the battery according to claim 21, wherein the battery is configured to provide electrical energy.
